# EUROPEAN PATENT APPLICATION

(11) **EP 4 567 559 A1**
(43) Date of publication of application: **11.06.2025**
(21) Application number: 24215735.2
(22) Date of filing: 27.11.2024
(51) Int. Cl.: G06F 1/26, G06F 1/3234, G06F 1/3296

(54) **SCHEDULING-BASED IDLE POWER REDUCTION FOR MACHINE LEARNING ACCELERATOR SYSTEMS**

(30) Priority: 04.12.2023 US 202318527915
(71) Applicant: Google LLC, Mountain View, CA 94043 (US)
(72) Inventor: Gan, Houle, Mountain View, California 94043 (US); Zhang, Xiao, Mountain View, California 94043 (US); Lo, David, Mountain View, California 94043 (US); Shen, Wei, Mountain View, California 94043 (US); Lin, Kun, Mountain View, California 94043 (US); Cheng, Liqun, Mountain View, California 94043 (US); Gandhi, Gaurav Atul, Mountain View, California 94043 (US); Chan, Jason Peter, Mountain View, California 94043 (US); Chung, Chee Yee, Mountain View, California 94043 (US)
(74) Representative: Betten & Resch

(57) **Abstract**

A method and system for controlling a supply voltage provided to a processor by generating a voltage setting command by a workload scheduler; and responding to the voltage setting command by instructing a voltage regulator that provides the supply voltage, at a supply voltage level, to set the supply voltage level to one of at least an idle voltage level or an active voltage level that is higher than the idle voltage level.

## Description

### BACKGROUND

A key consideration in computing systems is power consumption. To manage power consumption of a computing system one may adjust the supply voltage provided to the system's processor and/or adjust the frequency at which the processor operates. For example, a processor's supply voltage can be reduced at times when the processor workload does not require that the processor operate at its maximum rated supply voltage, thereby reducing the unnecessary power consumption that is associated with the excess supply voltage.

One technique used to reduce power consumption in computing systems is dynamic voltage and frequency scaling (DVFS). DVFS relies on a dedicated communication interface between a system's processor, e.g., a central processing unit (CPU) or an application-specific integrated circuit (ASIC), and the processor's voltage regulator (VR). The interface allows for real-time adjustment of the processor's voltage and frequency. However, employing DVFS requires that the processor be provided with hardware and software to support the selection and transition of the processor's p-states, and that the VR support the dedicated communication interface, all of which add cost, development time, and complexity to the system.

Another technique that may be used to adjust a processor's supply voltage is static voltage scaling (SVS). However, SVS adjusts the voltage level based on the processor's process skews, and does not have the capability of adjusting the voltage according to the processor's workload condition.

### BRIEF SUMMARY

It has been recognized that power management has been overlooked for processors that are expected to run regularly under high-load conditions because the constant power draw over long running times reduces the benefits of investing into DVFS-type features. It has been further recognized that without power management features, the supply voltage for such processors, such as machine learning (ML) ASICs, cannot be adjusted directly by the processor when the processor is idle, thereby resulting in unnecessarily high idle power consumption.

Accordingly, there is a desire for technology to manage processor power consumption by differentiating between processor busy states and processor idle states and reducing the processor supply voltage level when the processor is idle. Moreover, there is a desire for power management technology well-suited for ML applications, having low cost and complexity, and being backward compatible. In view of the desire for such power management technology, the presently disclosed technology is provided.

In one aspect, the presently disclosed technology provides a computing system including a processor; a voltage regulator for providing a supply voltage, at a supply voltage level, to the processor; a board management controller coupled to the voltage regulator by a controller-regulator communication link and operable to instruct the voltage regulator to set the supply voltage level to one of at least an idle voltage level or an active voltage level that is higher than the idle voltage level; and a host machine coupled to the board management controller by a host-controller communication link, operable to schedule workloads for the processor, and operable to generate a voltage setting command for directing the board management controller to instruct the voltage regulator to set the supply voltage level.

In another aspect the presently disclosed technology provides a method for controlling a supply voltage provided to a processor including generating a voltage setting command by a workload scheduler; and responding to the voltage setting command by instructing a voltage regulator that provides the supply voltage, at a supply voltage level, to set the supply voltage level to one of at least an idle voltage level or an active voltage level that is higher than the idle voltage level.

### BRIEF DESCRIPTION OF THE DRAWINGS

The accompanying drawings are not intended to be drawn to scale. Also, for purposes of clarity not every component may be labeled in every drawing. In the drawings:
Fig. 1 is a block diagram of a computing system according to an embodiment.
Fig. 2 is a block diagram of a processing system that may be used as the host machine shown in Fig. 1.
Fig. 3 is a flow chart depicting a technique for controlling a supply voltage provided to a processor.

### DETAILED DESCRIPTION

Examples of systems and methods are described herein. It should be understood that the words "example," "exemplary" and "illustrative" are used herein to mean "serving as an example, instance, or illustration." Any embodiment or feature described herein as being an "example," "exemplary" or "illustration" is not necessarily to be construed as preferred or advantageous over other embodiments or features. In the following description, reference is made to the accompanying figures, which form a part thereof. In the figures, similar symbols typically identify similar components, unless context dictates otherwise. Other embodiments may be utilized, and other changes may be made, without departing from the spirit or scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

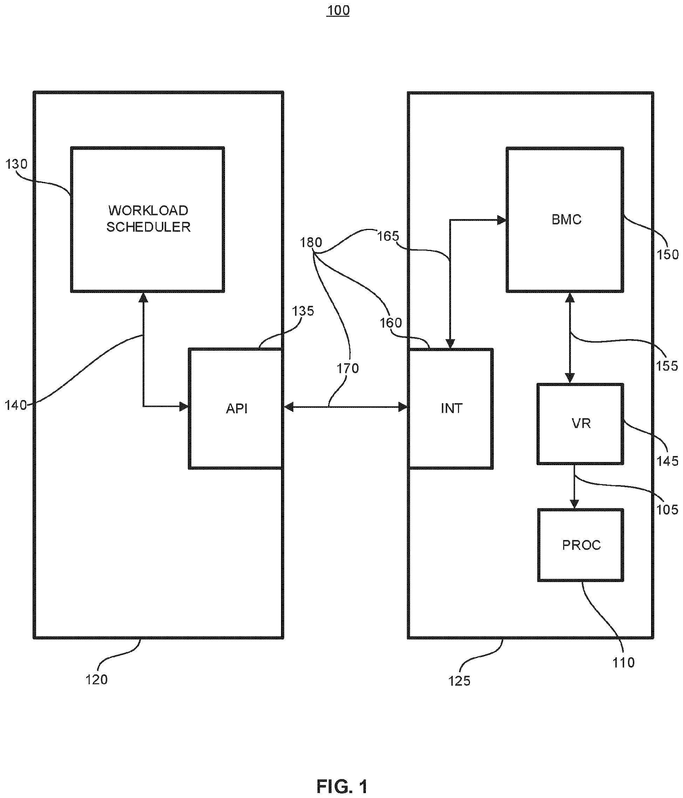

Fig. 1 is a block diagram of a computing system 100 in which a supply voltage provided to a processor 110 is controlled based on the workload assigned to processor 110. The computing system 100 is configured for ML applications, although neither the computing system 100 nor the presently disclosed technology is restricted to ML applications. As can be seen from Fig. 1, the computing system 100 includes a host machine 120 and an accelerator hardware tray 125. The host machine 120 includes a workload scheduler 130, which may take the form of scheduling software, and an application programming interface (API) 135, coupled to the workload scheduler 130 via a scheduler-API link 140. The accelerator hardware tray 125 includes the processor 110, a voltage regulator (VR) 145, a board management controller (BMC) 150, and an interface 160. The VR 145 is operable to provide a supply voltage at a supply voltage level (generally represented by arrow 105) to the processor 110. The BMC 150 is coupled to the VR 145 via a controller-regulator communication link 155 and is operable to instruct the VR 145 as to the supply voltage level 105 provided by the VR 145 to the processor 110.

The BMC 150 may take the form of a microcontroller chip tailored for printed circuit board (PCB) management purposes. In some embodiments, the BMC 150 may be an off-the-shelf microcontroller chip, with the connection of the chip to the other components of computing system 100 and the software running on the chip being customized according to the presently disclosed technology. Upon reviewing this disclosure, one skilled in the art will readily appreciate the wide range of alternative implementations of the BMC 150. In any case, the BMC 150 is coupled to the interface 160 via an interface-controller link 165, and the interface 160 is operable to relay signals received at the accelerator hardware tray 125 to the BMC 150.

The accelerator hardware tray 125 is coupled to the host machine 120 via a host-tray link 170. In some embodiments, the host-tray link 170 takes the form of a peripheral component interconnect express (PCIe) bus or a universal serial bus (USB), although the host-tray link 170 is not restricted to a PCIe bus or USB, and one skilled in the art will readily appreciate upon reviewing this disclosure that a wide range of communication link technologies may be employed to provide the host-tray link 170. In any event, the host-tray link 170, interface 160, and interface-controller link 165 may be collectively referred to as a host-controller communication link 180.

The host machine 120 and accelerator hardware tray 125 work together to manage the supply voltage 105 provided to the processor 110. In particular, the host machine 120 and accelerator hardware tray 125 work together to reduce the supply voltage level 105 to an idle voltage level at times when no workload is scheduled for the processor 110, i.e., at idle times. At other times, the supply voltage level 105 may return to an active voltage level, higher than the idle voltage level, either by default or in response to detection of a workload being scheduled for the processor 110 at an active time.

It should be noted that for clarity of presentation the present technology will be described largely in the context of the supply voltage level 105 being set to one of two possible levels, an idle voltage level and an active voltage level that is higher than the idle voltage level. However, the present technology is not limited to two possible supply voltage levels. For example, the present technology may be used to selectively set the supply voltage 105 to one of three possible levels, an idle voltage level, a low active voltage level that is higher than the idle voltage level, and a high active voltage level that is higher than the low active voltage level. In this manner, the supply voltage 105 may be set to the active voltage level appropriate for a scheduled workload. For instance, the supply voltage 105 may be set to the high active voltage level for workloads that require the high active voltage level, and may be set to the low active voltage level for workloads that do not require the high active voltage level. Upon reading this disclosure one skilled in the art will readily understand how to implement the present technology with any of two or more supply voltage levels.

Referring back to Fig. 1, the workload scheduler 130 of the host machine 120 is operable to schedule workloads for the processor 110 and generate voltage setting commands for directing the BMC 150. The BMC 150, in turn, instructs the VR 145 to set the supply voltage level 105 to one of at least an idle voltage level or an active voltage level that is higher than the idle voltage level. The instructions from the BMC 150 to the VR 145 are sent via the controller-regulator communication link 155.

The controller-regulator communication link 155 may be an inter-integrated circuit (I2C) bus, such as a power management bus (PMBus). Thus, in the Fig. 1 configuration control of the supply voltage level 105 does not require a dedicated communication interface between the processor 110 and the VR 145, but rather, may be realized through use of a standard interface between the VR 145 and the BMC 150.

In any event, when the host machine 120 determines that no workload is scheduled for the processor 110 at an idle time the host machine 120 generates a voltage setting command directing the BMC 150 to instruct the VR 145 to set the supply voltage level 105 to the idle voltage level at the idle time. The workload scheduler 130 may make such determination by tracking the workloads for the processor 110, and may send such voltage setting command to the BMC 150 via the scheduler-APIlink 140, API 135, and host-controller communication link 180.

In some embodiments, the host machine 120 is operable to track the workloads for the processor 110 so as to selectively increase the supply voltage level 105 from the idle voltage level. For example, when the processor 110 is idle and the workload scheduler 130 determines that a workload is scheduled for the processor 110 at an active time, the workload scheduler 130 generates a voltage setting command directing the BMC 150 to instruct the VR 145 to set the supply voltage level 105 to the active voltage level at the active time.

Further, as an option, the BMC 150 may be configured to monitor the VR 145 after instructing the VR 145 to set the supply voltage level 105 to the active voltage level, and upon determining that the supply voltage level 105 has reached the active voltage level, send a completion signal to the host machine 120. In this manner, the host machine 120 may be provided with a notification that the supply voltage level 105 has reached the active voltage level and can avoid launching workloads for the processor 110 while the supply voltage 105 is too low, as launching a workload while the supply voltage 105 is too low may cause the processor 110 to malfunction, frustrate the workload's execution, or cause the workload to execute incorrectly. For example, a completion signal indicating that the supply voltage level 105 has reached the active voltage level may be sent from the BMC 150 to the workload scheduler 130 via the host-controller communication link 180, API 135, and scheduler-API link 140 to notify the workload scheduler 130 that the processor 110 is ready to handle workloads.

In some embodiments, the host machine 120 may generate voltage setting commands periodically. For example, when the workload scheduler 130 determines that no workload is scheduled for the processor 110 at an idle time, the workload scheduler 130 sets a next periodic voltage setting command to direct the BMC 150 to instruct the VR 145 to set the supply voltage level 105 to the idle voltage level at the idle time; and when the processor 110 is idle and the workload scheduler 130 determines that a workload is scheduled for the processor 110 at an active time, the workload scheduler 130 sets a next periodic voltage setting command to direct the BMC 150 to instruct the VR 145 to set the supply voltage level 105 to the active voltage level at the active time.

In addition, the periodic embodiment may be optionally configured to guard against unexpected termination of workload scheduling operations by automatically raising the supply voltage level 105 to the active voltage level when an expected periodic voltage setting command is not received. For instance, when the BMC 150 does not receive an expected periodic voltage setting command from the workload scheduler 130, the BMC 150 instructs the VR 145 to set the supply voltage level 105 to the active voltage level.

In any case, it is envisioned that the present technology is well-suited for ML applications. As an example of such an application, the processor 110 of Fig. 1 may be an ASIC, and the host machine 120 is operable to assign ML workloads to the processor 110. In this manner, while the processor 110 is expected to run regularly under high-load conditions (e.g., while performing ML training computations), it is still possible to reduce overall power consumption by the processor 110. That is, idle power consumption by the processor 110 may be reduced by detecting the idle state of the processor 110 and reducing the processor supply voltage 105 in response to the detection. Moreover, the reduction in power consumption by processor 110 can be realized at low cost and complexity, without having to provide the processor 110 or VR 145 with specialized hardware or software, such as a dedicated communication bus between them.

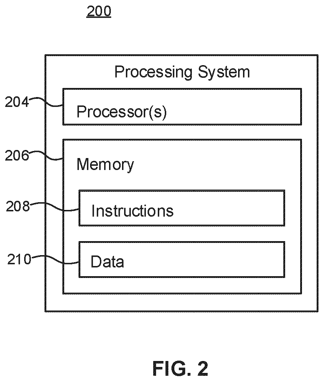

Turning now to Fig. 2, the figure is a block diagram of a processing system 200 that may be used as the host machine 120 of Fig. 1. The processing system 200 may include one or more processors 204 and a memory 206 for storing instructions 208 and data 210. The instructions 208 and/or data 210 may cause the processing system 200 to perform the operations of the workload scheduler 130 and the API 135 discussed in connection with Fig. 1. In some embodiments, the processing system 200 may be resident on a single computing device as the only system on the device, e.g., the processing system 200 may be a server, personal computer, or mobile device. In some other embodiments, the processing system 200 may be resident on a single computing device as one of a multiple of systems on the device, e.g., as a virtual machine on a device hosting a multiple of virtual machines. In still other embodiments, the processing system 200 may be resident on a cloud computing system or other distributed system, in which case the processing system 200 may be distributed across two or more different physical computing devices.

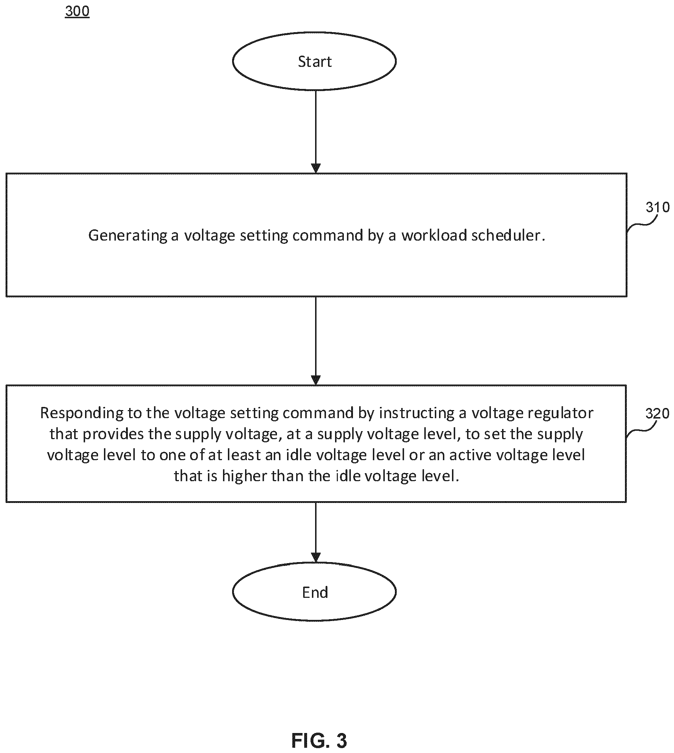

Referring now to Fig. 3, the figure is a flow chart 300 depicting a technique for controlling a supply voltage provided to a processor. As can be seen from Fig. 3, a first step for controlling the supply voltage may be generating a voltage setting command by a workload scheduler (step 310). By way of illustration, the first step may be embodied by the workload scheduler 130 of Fig. 1 generating a voltage setting command for decreasing the supply voltage upon determining that no workload is scheduled for the processor 110 at an idle time; or by the workload scheduler 130 of Fig. 1 generating a voltage setting command for increasing the supply voltage upon determining, during a time when the processor 110 is idle, that a workload is scheduled for the processor 110 at an active time.

After the first step, a next step for controlling the supply voltage may be responding to the voltage setting command by instructing a voltage regulator that provides the supply voltage to set the supply voltage level to one of at least an idle voltage level or an active voltage level that is higher than the idle voltage level (step 320). By way of illustration, the next step may be embodied by the BMC 150 of Fig. 1 responding to a voltage setting command generated by the workload scheduler 130 by instructing the VR 145 to set the supply voltage level 105 to a supply voltage level specified by the voltage setting command, e.g., to set the supply voltage level to an idle voltage level or an active voltage level that is higher than the idle voltage level.

Embodiments of the present technology include, but are not restricted to, the following.
(1) A computing system including a processor; a voltage regulator for providing a supply voltage, at a supply voltage level, to the processor; a board management controller coupled to the voltage regulator by a controller-regulator communication link and operable to instruct the voltage regulator to set the supply voltage level to one of at least an idle voltage level or an active voltage level that is higher than the idle voltage level; and a host machine coupled to the board management controller by a host-controller communication link, operable to schedule workloads for the processor, and operable to generate a voltage setting command for directing the board management controller to instruct the voltage regulator to set the supply voltage level.
(2) The computing system according to (1), wherein when the host machine determines that no workload is scheduled for the processor at an idle time the host machine generates the voltage setting command directing the board management controller to instruct the voltage regulator to set the supply voltage level to the idle voltage level at the idle time.
(3) The computing system according to (1), wherein when the processor is idle and the host machine determines that a workload is scheduled for the processor at an active time the host machine generates the voltage setting command directing the board management controller to instruct the voltage regulator to set the supply voltage level to the active voltage level at the active time.
(4) The computing system according to (3), wherein upon the supply voltage level reaching the active voltage level, the board management controller sends a completion signal to the host machine.
(5) The computing system according to (1), wherein the host machine generates the voltage setting command periodically, wherein when the host machine determines that no workload is scheduled for the processor at an idle time the host machine generates the voltage setting command directing the board management controller to instruct the voltage regulator that to set the supply voltage level to the idle voltage level at the idle time, and wherein when the processor is idle and the host machine determines that a workload is scheduled for the processor at an active time the host machine generates the voltage setting command directing the board management controller to instruct the voltage regulator to set the supply voltage level to the active voltage level at the active time.
(6) The computing system according to (5), wherein when no voltage setting command is generated for a period the board memory controller instructs the voltage regulator to set the supply voltage level to the active voltage level.
(7) The computing system according to (1), wherein the processor is an application-specific integrated circuit (ASIC).
(8) The method according to (7), wherein the host machine is operable to assign machine learning workloads to the ASIC.
(9) The computing system according to (1), wherein the controller-regulator communication link is an inter-integrated circuit (I2C) bus.
(10) The computing system according to (9), wherein the I2C bus is a power management bus (PMBus).
(11) The computing system according to (1), wherein the processor, the voltage regulator, and the board management controller are part of an accelerator hardware tray, and wherein the host machine includes a workload scheduler for scheduling the workloads for the processor and generating the voltage setting command, and an application programming interface (API) coupled to the workload scheduler and operable to communicate with the accelerator hardware tray over the host-controller communication link.
(12) The computing system according to (11), wherein the host-controller communication link includes a peripheral component interconnect express (PCIe) bus or a universal serial bus (USB).
(13) A method for controlling a supply voltage provided to a processor including generating a voltage setting command by a workload scheduler; and responding to the voltage setting command by instructing a voltage regulator that provides the supply voltage, at a supply voltage level, to set the supply voltage level to one of at least an idle voltage level or an active voltage level that is higher than the idle voltage level.
(14) The method according to (13), wherein the voltage setting command is generated in response to a determination by the workload scheduler that no workload is scheduled for the processor at an idle time, and wherein responding to the voltage setting command includes instructing the voltage regulator to set the supply voltage level to the idle voltage level at the idle time.
(15) The method according to (13), wherein the voltage setting command is generated when the processor is idle and is generated in response to a determination by the workload scheduler that a workload is scheduled for the processor at an active time, and wherein responding to the voltage setting command includes instructing the voltage regulator to set the supply voltage level to the active voltage level at the active time.
(16) The method according to (13), wherein the voltage setting command is generated periodically, wherein when a determination is made by the workload scheduler that no workload is scheduled for the processor at an idle time, responding to the voltage setting command includes instructing the voltage regulator that to set the supply voltage level to the idle voltage level at the idle time, and wherein when the processor is idle and a determination is made by the workload scheduler that a workload is scheduled for the processor at an active time, responding to the voltage setting command includes instructing the voltage regulator to set the supply voltage level to the active voltage level at the active time.
(17) The method according to (16), wherein the method further includes instructing the voltage regulator to set the supply voltage level to the active voltage level in response to a period passing with no voltage setting commend being generated.
(18) The method according to (13), wherein the processor is an application-specific integrated circuit (ASIC).
(19) The method according to (18), wherein the workload scheduler is operable to assign machine learning workloads to the ASIC.
(20) The method according to (13), wherein the workload scheduler is executed by a host machine, wherein the processor, the voltage regulator, and a board management controller are part of an accelerator hardware tray, and wherein the host machine provides the voltage setting command to the accelerator hardware tray, and wherein the board management controller responds to the voltage setting command by instructing the voltage regulator to set the supply voltage level to one of at least the idle voltage level or the active voltage level.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims.

## Claims

1. A computing system comprising:
a processor;
a voltage regulator for providing a supply voltage, at a supply voltage level, to the processor;
a board management controller coupled to the voltage regulator by a controller-regulator communication link and operable to instruct the voltage regulator to set the supply voltage level to one of at least an idle voltage level or an active voltage level that is higher than the idle voltage level; and
a host machine coupled to the board management controller by a host-controller communication link, operable to schedule workloads for the processor, and operable to generate a voltage setting command for directing the board management controller to instruct the voltage regulator to set the supply voltage level.

2. The computing system according to claim 1, wherein when the host machine determines that no workload is scheduled for the processor at an idle time the host machine generates the voltage setting command directing the board management controller to instruct the voltage regulator to set the supply voltage level to the idle voltage level at the idle time.

3. The computing system according to claim 1, wherein when the processor is idle and the host machine determines that a workload is scheduled for the processor at an active time the host machine generates the voltage setting command directing the board management controller to instruct the voltage regulator to set the supply voltage level to the active voltage level at the active time; and
wherein optionally, upon the supply voltage level reaching the active voltage level, the board management controller sends a completion signal to the host machine.

4. The computing system according to anyone of claims 1 to 3,
wherein the host machine generates the voltage setting command periodically,
wherein when the host machine determines that no workload is scheduled for the processor at an idle time the host machine generates the voltage setting command directing the board management controller to instruct the voltage regulator that to set the supply voltage level to the idle voltage level at the idle time, and
wherein when the processor is idle and the host machine determines that a workload is scheduled for the processor at an active time the host machine generates the voltage setting command directing the board management controller to instruct the voltage regulator to set the supply voltage level to the active voltage level at the active time.

5. The computing system according to claim 4, wherein when no voltage setting command is generated for a period the board memory controller instructs the voltage regulator to set the supply voltage level to the active voltage level.

6. The computing system according to any one of the preceding claims, wherein the controller-regulator communication link is an inter-integrated circuit (I2C) bus; and
wherein optionally the I2C bus is a power management bus (PMBus).

7. The computing system according to anyone of the preceding claims,
wherein the processor, the voltage regulator, and the board management controller are part of an accelerator hardware tray, and
wherein the host machine comprises a workload scheduler for scheduling the workloads for the processor and generating the voltage setting command, and an application programming interface (API) coupled to the workload scheduler and operable to communicate with the accelerator hardware tray over the host-controller communication link.

8. The computing system according to claim 7, wherein the host-controller communication link comprises a peripheral component interconnect express (PCIe) bus or a universal serial bus (USB).

9. A method for controlling a supply voltage provided to a processor comprising:
generating a voltage setting command by a workload scheduler; and
responding to the voltage setting command by instructing a voltage regulator that provides the supply voltage, at a supply voltage level, to set the supply voltage level to one of at least an idle voltage level or an active voltage level that is higher than the idle voltage level.

10. The method according to claim 9,
wherein the voltage setting command is generated in response to a determination by the workload scheduler that no workload is scheduled for the processor at an idle time, and
wherein responding to the voltage setting command comprises instructing the voltage regulator to set the supply voltage level to the idle voltage level at the idle time.

11. The method according to claim 9,
wherein the voltage setting command is generated when the processor is idle and is generated in response to a determination by the workload scheduler that a workload is scheduled for the processor at an active time, and
wherein responding to the voltage setting command comprises instructing the voltage regulator to set the supply voltage level to the active voltage level at the active time.

12. The method according to anyone of claims 9 to 11,
wherein the voltage setting command is generated periodically,
wherein when a determination is made by the workload scheduler that no workload is scheduled for the processor at an idle time, responding to the voltage setting command comprises instructing the voltage regulator that to set the supply voltage level to the idle voltage level at the idle time, and
wherein when the processor is idle and a determination is made by the workload scheduler that a workload is scheduled for the processor at an active time, responding to the voltage setting command comprises instructing the voltage regulator to set the supply voltage level to the active voltage level at the active time.

13. The method according to claim 12, wherein the method further comprises instructing the voltage regulator to set the supply voltage level to the active voltage level in response to a period passing with no voltage setting commend being generated.

14. The method according to one of claims 9 to 13,
wherein the workload scheduler is executed by a host machine,
wherein the processor, the voltage regulator, and a board management controller are part of an accelerator hardware tray, and
wherein the host machine provides the voltage setting command to the accelerator hardware tray, and
wherein the board management controller responds to the voltage setting command by instructing the voltage regulator to set the supply voltage level to one of at least the idle voltage level or the active voltage level.

15. The computing system according to anyone of claims 1 to 8 or the method according to anyone of claims 9 to 14, wherein the processor is an application-specific integrated circuit (ASIC); and
wherein optionally the workload scheduler is operable to assign machine learning workloads to the ASIC.
